# EUROPEAN PATENT SPECIFICATION

(11) **EP 0 549 679 B1**
(45) Date of publication and mention of the grant of the patent: **29.05.1996**
(21) Application number: 91916934.2
(22) Date of filing: 20.09.1991
(51) Int. Cl.: G09F 13/18, G09F 13/04

(54) **A DISPLAY SYSTEM**
ANZEIGEVORRICHTUNG
SYSTEME D'AFFICHAGE

(30) Priority: 20.09.1990 AU 2392/90
(43) Date of publication of application: 07.07.1993
(73) Proprietor: ILLUMINATION RESEARCH GROUP (PROPERTIES) PTY. LTD., Abbotsford, VIC 3067 (AU)
(72) Inventor: ASHALL, John, Mount Eliza, VIC 3195 (AU)
(74) Representative: Brown, Michael Stanley
(86) International application number: PCT/AU91/00436
(87) International publication number: WO 92/05535

(56) References cited:
- AU-A- 4 942 885
- FR-A- 2 620 795
- GB-A- 2 030 750
- US-A- 4 715 137
- US-A- 4 974 354
- US-A- 4 975 809
- Patent Abstracts of Japan, P1156, page 157, JP,A,2-269382 (MEITAKU SYST KK) 2 November 1990 (02.11.90)
- Patent Abstracts of Japan, P1101, page 11, JP,A,2-157791 (FUJITSU LTD) 18 June 1990 (16.06.90)

## Description

This invention relates to illuminated display systems.

Originally, illuminated display boards were essentially display boards with an external light source; for example, a billboard with lights. Smaller displays were generally even less sophisticated and were not even illuminated. However, as the market has grown and the need for advertising has increased, so has the need for more sophisticated, but just as simple, display systems.

With the advent of translucent plastics, back-illuminated signs and displays have become very popular. This type of system essentially comprises a bank of lights, generally of the fluorescent variety, with a translucent sheet with the sign applied thereto; either by way of painting or etching and the like. A disadvantage of such back-illuminated signs is that a large number of lights are required, thus increasing the running and maintenance costs since the lights are continually needing to be replaced. Furthermore, when one light needs to be replaced, the entire sign often has to be dismantled, which is a great inconvenience when a large sign is involved.

Clear sheet materials with the sign directly applied to the surface have recently been used. However, the problem with these types of signs/displays, as with the back-illuminated signs, is that a number of lights are required to fully illuminate the sign. In this case, the display requires a light source along each edge of the sheet in order for the sign to be illuminated and, even then, the middle portion of the display is not illuminated to the same degree as the edges.

The prior art has attempted to increase the degree of illumination of translucent and transparent mediums and generally these attempts have not been particularly successful when applied to larger areas, which is often the case with signs. Illumination of a small area is generally easier and an attempt at increasing the illumination of a small area is discussed in US-A-3,241,256. This deals with providing uniform brightness on instrument dials, scales and indicator tapes, generally small in nature. A dot pattern is applied to the rear side of a light-transmitting block only where the block is supported by a plate. As with previous systems, when larger areas are required to be illuminated, a number of light sources are required to fully illuminate the entire area of the sign.

Generic document US-A-4,715,137 shows an illuminated display system which includes an edge-lit light-transmitting sheet, and a display pattern on both surfaces of the sheet. The pattern is formed by adhering a plurality of light-transmitting beads to selected parts of the sheet by means of a light-transmitting adhesive.

It is an object of the present invention to provide an improved form of illuminated display system.

According to the present invention there is provided an illuminated display system which includes an edge-lit light transmitting sheet having two opposed surfaces to each of which dots are applied, characterised in that both of said surfaces have a matrix of etched, painted or screen-printed dots substantially covering said surfaces.

Surprisingly, the illuminated display system of the present invention, with an etched, painted or screen-printed dot matrix applied to both sides of the light-transmitting sheet provides greater and more even illumination of the sign. This is also true for large signs. The prior art does not suggest this important finding and the theory does not predict that the application of an etched, painted or screen-printed dot matrix to both sides would significantly enhance illumination. Further advantages of the system of the present invention are that maintenance and power requirements are reduced.

A single light source is preferably used, fixed to one edge of the light-transmitting sheet. It is only with very large signs that another light source will be required on another edge of the sheet.

The density of dots may be increased in the direction away from the edge at which the light source is fixed. The density of dots can be increased by increasing the number of dots per unit area and decreasing the gaps between the dots or by keeping the gaps between the dots the same and increasing the size of the dots.

The term "dots" as used in the specification and claims includes dots of any shape, for example, square, round, rectangular, triangular or irregular. The dots can be translucent or opaque and are preferably light-coloured, for example, white. The dots can be applied directly to the light-transmitting sheet by etching, painting or screen-printing. Alternatively, the matrix of etched, painted or screen-printed dots can be applied to a transparent film which is then adhered to the sheet. The sheet may be of glass or plastics material, but is preferably acrylic sheet.

If the sign is to be a one-sided sign, a backing sheet is preferably positioned in contact with one of the opposed surfaces of the light-transmitting sheet, said backing sheet being opaque and light in colour, preferably white.

If the sign is to be a two-sided sign, a translucent sheet is preferably positioned in contact with one of the opposed surfaces of the light-transmitting sheet. The translucent sheet is preferably light-coloured, particularly white, and may be be plain or may have the sign applied to the side thereof remote from the light-transmitting sheet.

The light source may be retained in a carrier which also acts as a support for the light-transmitting sheet. The light source is preferably a fluorescent tube or, depending on the size of the display, a number of fluorescent tubes.
Figure 1 shows a preferred form of illuminated display system in accordance with the invention,
Figure 2a shows a preferred form of one-sided sign, and
Figure 2b shows a preferred form of two-sided sign.

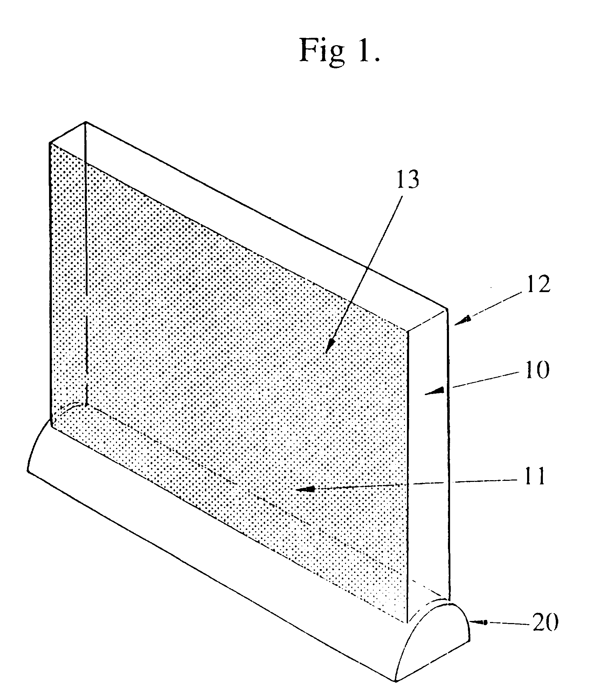

The display system shown in Figure 1 includes a transparent sheet 10 with a matrix of dots 13 applied to surface 11 of the sheet 10. A matrix of dots 13 is also applied to the other side 12 of the sheet 10. The transparent sheet 10 can be accommodated in a carrier 20 which also houses a light source (not shown). It should be noted that the light source can be fixed in alternate ways, provided that the light source is substantially on the edge of the transparent sheet 10.

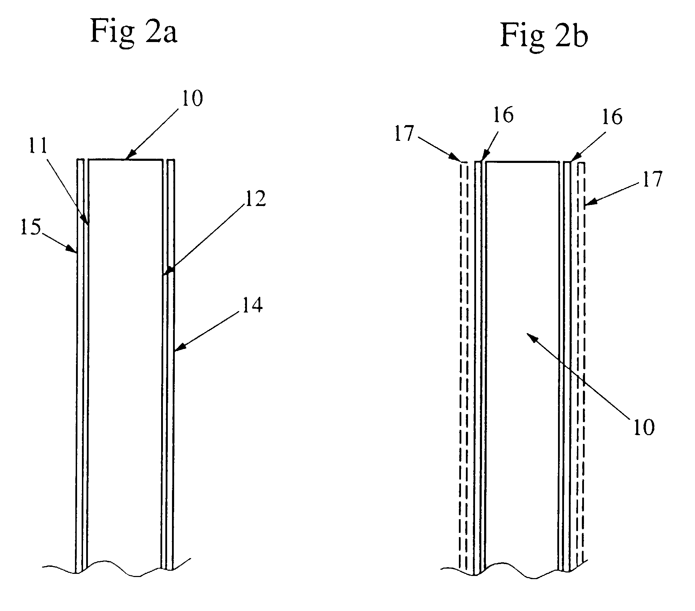

Figure 2a illustrates an arrangement for a one-sided sign in accordance with the invention. There is a transparent sheet 10 with a dot matrix 13 applied to both sides 11 and 12. A backing sheet 14, which is opaque and preferably white in colour, is fixed to the transparent sheet 10. The drawing shows a gap between each of the layers. This is for clarity of illustration only and, in practice, the layers will be in substantial contact with each other. Sheet 15 has the sign printed on its front side. The side of sheet 15 in contact with the transparent sheet 10 is light in colour and generally white. Sheet 15 is sufficiently translucent to allow some light to pass through the sheet and illuminate the sign. Materials found to be sufficiently translucent include paper (for example, posters) and plastic materials.

Figure 2b illustrates an arrangement for a two-sided sign in accordance with the invention. In the case of a two-sided sign, sufficiently translucent sheets 16 are fixed to the transparent sheet 10 with dot matrix thereon. These sheets 16 may be plain or have the sign applied to the outer face of the sheet. The face contacting the transparent sheet 10, at least, is light coloured and preferably white. Similarly if the sheet 16 is plain, the sheet is preferably light coloured and more preferably white. In the case where sheets 16 are plain, further sheets 17 may be incorporated into the sign system, wherein the sheets 17 have the sign applied thereto. Once again sheets 17 are sufficiently translucent to allow some of the light to pass through and illuminate the sign. Similarly for the one-sided sign sheet 15 may be plain and an additional translucent sheet (not shown) can be fixed in front of the plain sheet 15.

Framework (not shown) or the like, can be used to secure all of the layers together. Similarly the carrier and light source housing 20 can also retain the translucent sign sheet.

To more clearly illustrate the present invention tests were conducted on different sized signs wherein the dot matrix in the first instance is only applied to one side of the transparent medium. The dot matrix in this preferred embodiment is applied by screen printing white dots directly on to the transparent material, in this case perspex. The density of the dot matrix, as indicated previously, increases away from the light source.

Secondly, the dot matrix is applied to both sides of the transparent medium in the same way as for the one-sided application.

In both cases only one edge of the sign had a lighting means attached thereto and fluorescent lighting was used. Furthermore, only one-sided signs were formed, and thus an opaque white backing sheet was used in the trials.

Light meter readings were taken at two positions on each of the signs, midway from the light source and at the opposite end of the light source.

The results of the tests are shown below:

**Table 1**

| Size of Sign (cm x cm) | | Light Meter Reading (Lux) | | (cm) Distance from light source light travelled |
|---|---|---|---|---|
| | | Midway from light source | At Opposite end of light source | |
| 30 x 16 | one-sided | 3400 | 2400 | 16 |
| | two-sided | 2600 | 2400 | |
| 30 x 30 | one-sided | 1500 | 1250 | 30 |
| | two-sided | 1950 | 1450 | |
| 60 x 45 | one-sided | 475 | 435 | 45 |
| | two-sided | 810 | 685 | |
| 60 x 60 | one-sided | 440 | 300 | 60 |
| | two-sided | 720 | 440 | |

The test results clearly indicate a marked improvement of the illumination of the sign when the dot matrix is applied to both sides of the transparent medium. This is especially true in the middle of the sign wherein most of the message to be illuminated is placed. Furthermore the effectiveness of the dot matrix is still good even for larger sizes.

The display system in accordance with the invention can be used in small and very large displays and advantageously providing good illumination without the large number of lights previously required. Manufacturing and maintenance of the signs is less time consuming and simpler.

## Claims

1. An illuminated display system which includes an edge-lit light-transmitting sheet (10) having two opposed surfaces (11 and 12) to each of which dots are applied, characterised in that both of said surfaces (11 and 12) have a matrix of etched, painted or screen-printed dots (13) substantially covering said surfaces (11 and 12).

2. An illuminated display system according to Claim 1, characterised in that the dots are translucent or opaque.

3. An illuminated display system according to Claim 1, characterised in that a translucent sheet (15) having at least one light-coloured surface is positioned in contact with one (11) of the surfaces of the light-transmitting sheet (10).

4. An illuminated display system according to Claim 3, characterised in that a light-coloured opaque backing sheet (14) is positioned in contact with the other (12) of the surfaces of the light-transmitting sheet (10).

5. An illuminated display system according to Claim 1, characterised in that two translucent sheets (16) are positioned one on each side of the light-transmitting sheet (10), each of said sheets (16) having a light-coloured surface in contact with one (11 or 12) of the surfaces of the light-transmitting sheet (10).

6. An illuminated display system according to Claim 1, characterised in that each matrix of dots (13) is applied to a transparent film which is adhered to the light-transmitting sheet (10).

7. An illuminated display system according to Claim 1, characterised in that the density of dots is increased in the direction away from the edge of the sheet (10) at which the light source is located, such increase in density being achieved either by increasing the number of dots per unit area and decreasing the gaps between the dots or by keeping the gaps between the dots the same and increasing the size of the dots.

## Patentansprüche

1. Beleuchtetes Anzeigeszstem mit einer kantenbeleuchteten, lichtübertragenden Platte (10) mit zwei sich gegenüberliegenden Flächen (11 und 12), die jeweils mit Punkten versehen sind,
dadurch gekennzeichnet,
daß beide Flächen (11 und 12) jeweils eine Anordnung von geätzten, gemalten oder siebgedruckten Punkten (13) aufweisen, die die Flächen (11 und 12) im wesentlichen bedecken.

2. Beleuchtetes Anzeigesystem nach Anspruch 1,
dadurch gekennzeichnet,
daß die Punkte lichtdurchlässig oder lichtundurchlässig sind.

3. Beleuchtetes Anzeigesystem nach Anspruch 1,
dadurch gekennzeichnet,
daß eine lichtdurchlässige Platte (15) mit wenigstens einer hell farbigen Oberfläche so angeordnet ist, daß sie mit einer (11) der Flächen der lichtübertragenden Platte (10) in Berührung steht.

4. Beleuchtetes Anzeigesystem nach Anspruch 3,
dadurch gekennzeichnet,
daß eine hellfarbige, lichtundurchlässige Stützplatte (14) so angeordnet ist, daß sie die andere (12) der beiden Flächen der lichtübertragenden Platte (10) berührt.

5. Beleuchtetes Anzeigesystem nach Anspruch 1,
dadurch gekennzeichnet,
daß zwei lichtdurchlässige Platten (16) so angeordnet sind, daß sich jeweils eine auf jeder Seite der lichtübertragenden Platte (10) befindet, wobei jede der Platten (16) eine hellfarbige Oberfläche aufweist, die mit einer (11 oder 12) der Flächen der lichtübertragenden Platte (10) in Berührung steht.

6. Beleuchtetes Anzeigesystem nach Anspruch 1,
dadurch gekennzeichnet,
daß jede der Anordnungen von Punkten (13) auf einen transparenten Film aufgetragen wird, der an der lichtübertragenden Platte (10) haftet.

7. Beleuchtetes Anzeigesytem nach Anspruch 1,
dadurch gekennzeichnet,
daß die Dichte der Punkte sich in der der Platten (10)-Kante mit der Lichtquelle entgegengesetzten Richtung erhöht, wobei diese Verdichtung entweder durch Vergrößerung der Punktezahl pro Flächeneinheit oder durch Verkleinerung der Zwischenräume zwischen den Punkten oder durch Beibehaltung der Zwischenraumgrößen zwischen den Punkten und Vergrößerung der Punkte erreicht wird.

## Revendications

1. Un panneau lumineux qui comprend une plaque (10), illuminée du bord, qui transmet de la lumière, et ayant deux surfaces opposées (11 et 12) à chacune desquelles des points sont appliqués, caracterisé en ce que toutes les deux des dites surfaces (11 et 12) ont une matrice de points gravés, peints ou imprimés au cadre (13) qui couvre en grande partie les dites surfaces (11 et 12).

2. Un panneau lumineux selon la revendication 1, caracterisé en ce que les points sont ou transparents ou opaques.

3. Un panneau lumineux selon la revendication 1, caracterisé en ce qu'une plaque transparente (15) ayant au moins une surface d'une couleur claire est placée en contact avec une (11) des surfaces de la plaque (10) qui transmet de la lumière.

4. Un panneau lumineux selon la revendication 3, caracterisé en ce qu'une plaque (14) d'endossure opaque et d'une couleur claire est placée en contact avec l'autre (12) surface de la plaque (10) qui transmet de la lumière.

5. Un panneau lumineux selon la revendication 1, caracterisé en ce que les deux plaques transparentes (16) sont placées une sur chaque côté de la plaque (10) qui transmet de la lumière, chacune des dites plaques (16) ayant une surface d'une couleur claire en contact avec une (11 ou 12) des surfaces de la plaque (10) qui transmet de la lumière.

6. Un panneau lumineux selon la revendication 1, caracterisé en ce que chaque matrice de points (13) est appliquée à une pellicule transparente qui s'adhère a la plaque (10) qui transmet de la lumière.

7. Un panneau lumineux selon la revendication 1, caracterisé en ce que la densité des points augmente au loin du bord de la plaque (10) à laquelle la source de la lumière se situe, une telle augmentation de densité étant achevée ou par le moyen d'augmentant le nombre de points par superficie unitaire et diminuant les vides entre les points ou par le moyen de tenir pareils les vides entre les points et augmentant la taille des points.
